# EUROPEAN PATENT APPLICATION

(11) **EP 4 726 659 A1**
(43) Date of publication of application: **15.04.2026**
(21) Application number: 24884375.7
(22) Date of filing: 08.10.2024
(51) Int. Cl.: G06T 13/40

(54) **GENERATION OF VIRTUAL AVATAR**

(30) Priority: 31.10.2023 CN 202311445901
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: FAN, Wenxin, Ningbo, Zhejiang 315899 (CN)
(74) Representative: Michalski Hüttermann & Partner Patentanwälte mbB
(86) International application number: PCT/CN2024/123505
(87) International publication number: WO 2025/092371

(57) **Abstract**

The present disclosure provides a virtual avatar generation method, apparatus, device, and storage medium, relating to the field of image processing technologies. The virtual avatar generation method provided by the present disclosure includes: according to a generation mode of a virtual avatar set by a user, acquiring a material corresponding to the generation mode; according to preference information of the user and in combination with key information extracted from the material, generating description information of the virtual avatar; and generating the virtual avatar by inputting the description information of the virtual avatar into a target model corresponding to a target style indicated by the description information.

## Description

### CROSS-REFERENCE TO RELATED APPLICATIONS

This application claims the benefit of priority to Chinese Patent Application No. 202311445901.7, filed to the China National Intellectual Property Administration on October 31, 2023, the entire content of which is incorporated herein by reference.

### TECHNICAL FIELD

One or more embodiments of the present disclosure relate to, but are not limited to, the field of image processing technologies, and in particular, relate to, but are not limited to, a virtual avatar generation method, apparatus, device, and storage medium.

### BACKGROUND

A virtual avatar is a communication medium between a person and a vehicle. The virtual avatar appears on the central control screen in different scenarios. For example, the virtual avatar may appear in the startup animation to offer greetings; the virtual avatar on the central control screen can answer questions raised by the user; the virtual avatar on the central control screen can perceive the driver's driving status during travel and remind the driver to drive safely using a small speaker, etc. Therefore, the design of the virtual avatar affects the user experience.

### SUMMARY

Below is a summary of the subject matters described in detail herein. The summary is not intended to limit the protection scope of the claims.

According to a first aspect of one or more embodiments of the present disclosure, a virtual avatar generation method is provided, applied to a central control system of a vehicle, the method including:
according to a generation mode of a virtual avatar set by a user, acquiring a material corresponding to the generation mode; according to preference information of the user, and in combination with key information extracted from the material, generating description information of the virtual avatar; generating the virtual avatar by inputting the description information of the virtual avatar into a target model corresponding to a target style indicated by the description information.

In some embodiments, in a case that the generation mode is adjusting a default virtual avatar based on environmental information, acquiring the material corresponding to the generation mode includes:
acquiring a reference image of the default virtual avatar, and the environmental information at a current location of the vehicle; determining the reference image and the environmental information as the material required for generating the virtual avatar;
generating the description information of the virtual avatar according to the preference information of the user and in combination with the key information extracted from the material includes:
acquiring at least one first keyword associated with the environmental information; determining a preset template conforming to the preference information of the user; according to the preset template and the at least one first keyword, obtaining a description statement of the virtual avatar;
determining the reference image and the description statement as the description information of the virtual avatar.

In some embodiments, in a case that the generation mode is adjusting the default virtual avatar based on the environmental information and geographical information, acquiring the material corresponding to the generation mode includes:
acquiring a reference image of the default virtual avatar, and the environmental information and customs at the current location of the vehicle; determining the reference image, the environmental information, and the customs as the material required for generating the virtual avatar;
generating the description information of the virtual avatar according to the preference information of the user and in combination with the key information extracted from the material includes:
acquiring at least one first keyword associated with the environmental information, and at least one second keyword associated with the customs; determining a preset template conforming to the preference information of the user; according to the preset template, the at least one first keyword, and the at least one second keyword, obtaining a description statement of the virtual avatar; determining the reference image and the description statement as the description information of the virtual avatar.

In some embodiments, in a case that the generation mode is generating the virtual avatar based on a collected face image, acquiring the material corresponding to the generation mode includes:
acquiring a face image collected by an image capture device in the vehicle; determining the face image as the material required for generating the virtual avatar;
generating the description information of the virtual avatar according to the preference information of the user and in combination with the key information extracted from the material includes:
recognizing the face image, acquiring a facial feature of the face image; acquiring at least one third keyword associated with the facial feature; determining a preset template conforming to the preference information of the user; according to the preset template and the at least one third keyword, obtaining a description statement of the virtual avatar; determining the face image and the description statement as the description information of the virtual avatar.

In some embodiments, in a case that the generation mode is selecting a preset virtual avatar based on collected in-vehicle information, the method further includes:
acquiring a first image collected by an image capture device in the vehicle; acquiring a face sub-image in the first image; matching the face sub-image with a pre-stored base image, and generating a virtual avatar corresponding to the matched base image.

In some embodiments, in a case that the generation mode is a custom virtual avatar, acquiring the material corresponding to the generation mode includes:
acquiring a description statement of the virtual avatar input by the user;
determining the description statement as the material required for generating the virtual avatar;
generating the description information of the virtual avatar according to the preference information of the user and in combination with the key information extracted from the material includes:
checking the description statement, and in response to determining that the description statement conforms to a set rule, determining the description statement as the description information of the virtual avatar.

In some embodiments, in a case that the generation mode is a custom virtual avatar, acquiring the material corresponding to the generation mode includes: acquiring a description statement of the virtual avatar and a second image input by the user; determining the description statement and the second image as the material required for generating the virtual avatar; generating the description information of the virtual avatar according to the preference information of the user and in combination with the key information extracted from the material includes: checking the description statement, and in response to determining that the description statement conforms to a set rule, determining the description statement and the second image as the description information of the virtual avatar.

In some embodiments, generating the virtual avatar by inputting the description information of the virtual avatar into the target model corresponding to the target style indicated by the description information includes:
in response to detecting that the user allows generating the virtual avatar based on a network and the central control system is connected to the network, downloading, from a server, the target model corresponding to the target style indicated by the description information, and inputting the description information into the target model to obtain the virtual avatar;
in response to detecting that the user does not allow generating the virtual avatar based on the network, or the user allows generating the virtual avatar based on the network but the central control system is not connected to the network, acquiring, from pre-stored target models, the target model corresponding to the target style indicated by the description information, and inputting the description information into the target model to obtain the virtual avatar.

According to a second aspect of one or more embodiments of the present disclosure, a virtual avatar generation apparatus is provided, applied to a central control system of a vehicle, the apparatus including:
an acquisition unit, configured to, according to a generation mode of a virtual avatar set by a user, acquire a material corresponding to the generation mode;
a generation unit, configured to, according to preference information of the user and in combination with key information extracted from the material, generate description information of the virtual avatar, and generate the virtual avatar by inputting the description information of the virtual avatar into a target model corresponding to a target style indicated by the description information.

According to a third aspect of one or more embodiments of the present disclosure, an electronic device is provided, including:
a processor; a memory for storing processor-executable instructions; where the processor-executable instructions are executable by the processor to implement any one of the above-mentioned methods.

According to a fourth aspect of one or more embodiments of the present disclosure, a computer-readable storage medium is provided, having computer instructions stored thereon, where the computer instructions are executable by a processor to implement any one of the above-mentioned methods.

In the virtual avatar generation method provided by the present disclosure, a material corresponding to a generation mode is acquired according to the generation mode of a virtual avatar set by a user; description information is generated according to preference information of the user and in combination with key information extracted from the material; the description information of the virtual avatar is input into a target model corresponding to a target style indicated by the description information to generate the virtual avatar. Through the present disclosure, a virtual avatar conforming to user preferences can be automatically generated according to the generation mode set by the user, thereby improving user experience.

Other aspects will become apparent after reading and understanding the accompanying drawings and detailed description.

### BRIEF DESCRIPTION OF DRAWINGS

FIG. 1 is a schematic flowchart of a virtual avatar generation method according to an embodiment.
FIG. 2 is a schematic diagram of a virtual avatar generation apparatus according to an embodiment.
FIG. 3 is a schematic structural diagram of a device according to an embodiment.

### DETAILED DESCRIPTION

Exemplary embodiments will be described in detail here, with their examples illustrated in the accompanying drawings. When the following description refers to the drawings, unless otherwise indicated, the same numbers in different drawings represent the same or similar elements. The implementations described in the following embodiments do not represent all implementations consistent with one or more embodiments of the present disclosure. Rather, they are merely examples of apparatuses and methods consistent with some aspects of one or more embodiments of the present disclosure as detailed in the appended claims.

It should be noted that in other embodiments, the steps of the corresponding methods are not necessarily performed in the order shown and described in the present disclosure. In some other embodiments, the methods may include more or fewer steps than those described in the present disclosure. In addition, a single step described in the present disclosure may be decomposed into multiple steps for description in other embodiments; and multiple steps described in the present disclosure may be combined into a single step for description in other embodiments.

The virtual avatar serves as a communication medium between a person and a vehicle, and the display style of the virtual avatar can reflect user personalization. However, current virtual avatars are of a single type and cannot meet the personalized needs of users.

In view of this, the present disclosure provides a virtual avatar generation method applied to a central control system of a vehicle. The method includes acquiring a material corresponding to a generation mode according to the generation mode of a virtual avatar set by a user; generating description information of the virtual avatar according to preference information of the user and in combination with key information extracted from the material; and generating the virtual avatar by inputting the description information of the virtual avatar into a target model corresponding to a target style indicated by the description information. Thereby, a virtual avatar conforming to user preferences can be automatically generated according to the generation mode of the virtual avatar set by the user, thus improving user experience.

The following embodiments will introduce the solutions provided by the present disclosure in conjunction with the accompanying drawings.

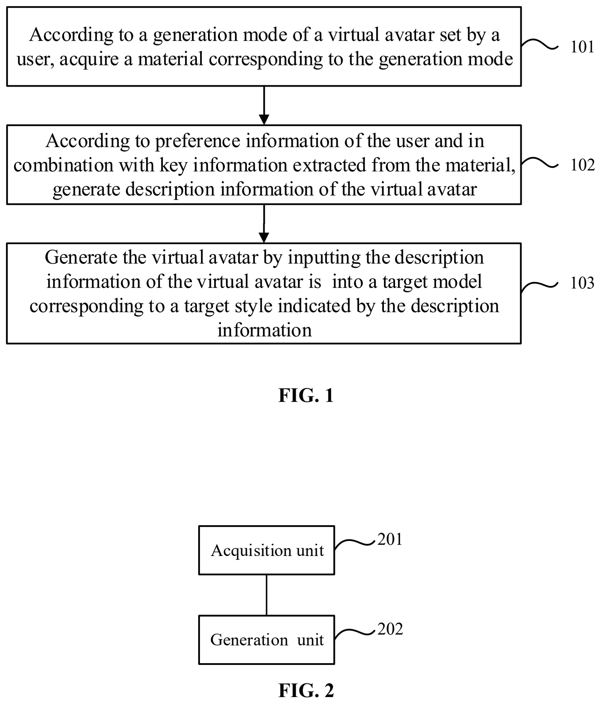

FIG. 1 is a schematic flowchart of a virtual avatar generation method according to an embodiment. As shown in FIG. 1, the method provided by the embodiment of the present disclosure includes steps 101 to 103.

At step 101, according to a generation mode of a virtual avatar set by a user, a material corresponding to the generation mode is acquired.

In this embodiment, the generation modes of the virtual avatar available for user selection include: a mode of adjusting a default virtual avatar based on environmental information, a mode of adjusting a default virtual avatar based on environmental information and geographical information, and a mode of generating a virtual avatar based on a collected face image, and so on.

The material required for generating the virtual avatar differs when using different generation modes. Therefore, after obtaining the generation mode set by the user, the material corresponding to the generation mode can be acquired. For example, the material may include environmental information and geographical information at the location of the vehicle and/or a face image collected by an image capture device within the vehicle.

At step 102, according to preference information of the user and in combination with key information extracted from the material, description information of the virtual avatar is generated.

The preference information of the user refers to the style in which the user expects to generate the virtual avatar, such as sketch style, watercolor style, anime style, trendy style, mechanical style, ACG (Anime Comic Game) style, etc.

In this embodiment, the preference information of the user can be preset by the user, or can be determined based on various behavioral data and preferences of the user. For example, multiple virtual avatars of different styles are displayed for the user to select, and preference information of the user is determined based on selection operation of the user.

A preset template can be determined according to the preference information of the user. The preset template includes a content description part, a style description part, and a parameter description part, etc. The content description part is used to indicate the subject of the virtual avatar, the state of the virtual avatar, the clothing worn, etc.; the style description part is used to indicate the display style of the virtual avatar, such as sketch style, watercolor style, anime style, trendy style, mechanical style, ACG style; the parameter description part is used to indicate the size of the virtual avatar, etc.

When the preference information of the user is determined, the style description part in the preset template can be determined, and combined with the key information extracted from the material, the description information of the virtual avatar can be generated. The description information in this embodiment is used to describe the subject, accessories, and display style of the virtual avatar expected by the user.

In some embodiments, the preset template can be updated, for example, by receiving the latest version of the preset template delivered by the server when connected to the network. Those skilled in the art should understand that the preference information of the user can also be updated periodically or non-periodically, and popular styles can be recommended to the user, which is not limited in the present disclosure.

At step 103, the description information of the virtual avatar is input into a target model corresponding to a target style indicated by the description information to generate the virtual avatar.

Since different styles correspond to different models, the description information of the virtual avatar is input into the target model corresponding to the target style indicated by the description information, to obtain the virtual avatar described by the description information that meets the user's expectations.

In this embodiment, the target model corresponding to the target style can be determined according to user settings. That is, in a case that the user does not allow generating the virtual avatar based on a network, or the user allows generating the virtual avatar based on the network but the central control system is not connected to the network, the target model corresponding to the target style indicated by the description information is acquired from pre-stored target models. The styles corresponding to the pre-stored models may be limited. In some cases, if there is no model matching the target style among the pre-stored models, a model close to the target style can be determined as the target model.

In a case that generating the virtual avatar based on the network is allowed and the central control system is connected to the network, the target model corresponding to the target style indicated by the description information can be downloaded from a server. The target model downloaded from the server is the current latest version of the model continuously trained by the server based on sample data. At the same time, the styles corresponding to the models stored in the server are relatively more refined, so a target model closer to the target style can be obtained. Using the target model downloaded from the server can output a virtual avatar with better results.

In implementation, in response to detecting that generating the virtual avatar based on the network is allowed and the central control system is connected to the network, the target model corresponding to the target style indicated by the description information is downloaded from the server, and the description information is input into the target model to obtain the virtual avatar; in response to detecting that generating the virtual avatar based on the network is not allowed, or generating the virtual avatar based on the network is allowed but the central control system is not connected to the network, the target model corresponding to the target style indicated by the description information is acquired from pre-stored target models, and the description information is input into the target model to obtain the virtual avatar.

In some embodiments, if the virtual avatar obtained after inputting the description information into the target model does not meet the user's expectations, the user can instruct to regenerate a virtual avatar. That is, in response to detecting a regeneration instruction issued by the user, a modification direction indicated by the user is acquired, and the virtual avatar is regenerated according to the modification direction indicated by the user.

For example, if the generated virtual avatar does not meet the user's expectations, the user can click a regeneration control on the display screen. After the regeneration instruction issued by the user is detected, the modification direction indicated by the user is acquired, the description information is regenerated according to the modification direction indicated by the user, and thereby the regenerated virtual avatar is obtained. Herein, the modification direction can be displayed on the display screen, and the modification direction input by the user can be acquired; or the modification direction issued by the user via voice can be received, which is not limited in the present disclosure.

The following embodiments describe the process of generating the virtual avatar under different generation modes set by the user.

In a case that the generation mode of the virtual avatar set by the user is the mode of adjusting a default virtual avatar based on environmental information, acquiring the material corresponding to the generation mode may include: acquiring a reference image of the default virtual avatar, and environmental information at a current location of the vehicle; and determining the reference image and the environmental information as the material required for generating the virtual avatar.

In this embodiment, the reference image of the default virtual avatar may be an image built into the system, such as an image of a cartoon character; the reference image of the virtual avatar may also be an image uploaded by the user, such as an image of a character liked by the user. The environmental information includes weather information, such as weather, temperature, humidity, wind direction, wind force, and air, etc.

In a case that the material required for generating the virtual avatar includes the reference image and the environmental information, generating the description information of the virtual avatar according to the preference information of the user and in combination with the key information extracted from the material may include: acquiring at least one first keyword associated with the environmental information; determining a preset template conforming to the preference information of the user; according to the preset template and the at least one first keyword, obtaining a description statement of the virtual avatar; and determining the reference image and the description statement as the description information of the virtual avatar.

A first mapping relationship table between different environmental information and first keywords is pre-constructed, and at least one first keyword associated with the environmental information is determined from the first mapping relationship table.

In an example, at least one first keyword can be used to replace placeholders in the preset template, thereby obtaining the description statement of the virtual avatar. In another example, the target style conforming to the preference information of the user and the at least one first keyword can be spliced according to a pre-set splicing rule to obtain the description statement of the virtual avatar.

In the mode of adjusting the default virtual avatar based on environmental information set by the user, the default virtual avatar can be adjusted according to the environmental information. This mode can present the effect of the default virtual avatar changing with seasons and climate.

In a case that the generation mode is the mode of adjusting a default virtual avatar based on environmental information and geographical information, acquiring the material corresponding to the generation mode may include: acquiring a reference image of the default virtual avatar, and environmental information and customs at a current location of the vehicle; and determining the reference image, the environmental information, and the customs as the material required for generating the virtual avatar.

In a case that the material required for generating the virtual avatar includes the reference image, the environmental information, and the customs, generating the description information of the virtual avatar according to the preference information of the user and in combination with the key information extracted from the material may include: acquiring at least one first keyword associated with the environmental information, and at least one second keyword associated with the customs; determining a preset template conforming to the preference information of the user; according to the preset template, the at least one first keyword, and the at least one second keyword, obtaining a description statement of the virtual avatar; and determining the reference image and the description statement as the description information of the virtual avatar.

The customs in this embodiment may include the dressing style of ethnic minorities at the location of the vehicle. For example, in Guizhou Province, the dressing style of the Miao people is reflected on the virtual avatar, increasing the fun of the virtual avatar. The mode of adjusting the default virtual avatar based on environmental information and geographical information is suitable for self-driving tour scenarios. When passing through different places, a virtual avatar corresponding to the customs of that place is displayed, thereby improving user experience.

In a case that the generation mode is the mode of generating a virtual avatar based on a collected face image, acquiring the material corresponding to the generation mode may include: acquiring a face image collected by an image capture device in the vehicle; and determining the face image as the material required for generating the virtual avatar.

In this embodiment, the image capture device in the vehicle is configured to collect a face image of the driver or a user on a designated seat, and the virtual avatar is generated based on the face image.

In a case that the material includes the face image, generating the description information of the virtual avatar according to the preference information of the user and in combination with the key information extracted from the material may include: recognizing the face image, acquiring a facial feature of the face image; acquiring at least one third keyword associated with the facial feature; determining a preset template conforming to the preference information of the user; according to the preset template and the at least one third keyword, obtaining a description statement of the virtual avatar; and determining the face image and the description statement as the description information of the virtual avatar. For example, the face image is recognized to obtain a facial feature of the face image being a big smile, at this time, the third keyword is a big smile, and the preset template determined according to the preference information of the user is a watercolor style, so the obtained description statement of the virtual avatar is: "has a big smile expression in watercolor style". At this time, the description information of the virtual avatar determined according to the face image and the description statement may include: a face image with a big smile expression in watercolor style.

Through this embodiment, the collected face image can be converted into a virtual avatar conforming to user preferences, increasing the intimacy between the user and the virtual avatar, and improving the experience of user interaction with the virtual avatar.

In a case that the generation mode is selecting a preset virtual avatar based on collected in-vehicle information, the method further includes: acquiring a first image collected by an image capture device in the vehicle; acquiring a face sub-image in the first image; matching the face sub-image with a pre-stored base image, and generating a virtual avatar corresponding to the matched base image.

The user can preset different virtual avatars for different scenarios. For example, in a family outing scenario, generate a virtual avatar corresponding to the family scenario, such as three virtual avatars corresponding to respective persons in a family of three.

Taking a family of three as an example, face base images of respective family members are pre-stored, a first image collected by an image capture device in the vehicle is acquired, the first image including images of users on different seats in the vehicle. A face sub-image in the first image is acquired, and the face sub-image is matched with the pre-stored face base images. If each face sub-image in the first image matches the pre-stored face base images, it indicates that the current members in the vehicle are family members. In this case, one or more virtual avatars corresponding to the matched base images can be generated. For example, generating a virtual avatar including the pre-stored face base images corresponding to each family member. In this embodiment, the generated virtual avatars can enhance the in-vehicle atmosphere and fun during family collective trips.

In a case that the generation mode is a custom virtual avatar, acquiring the material corresponding to the generation mode may include: acquiring a description statement input by the user, and determining the description statement as the material required for generating the virtual avatar; or acquiring a description statement and a second image input by the user, and determining the description statement and the second image as the material required for generating the virtual avatar. In addition, technologies such as 2D or 3D virtual avatar driving, virtual engine construction, voice driving, motion capture, facial capture, and object tracking can also be used to generate a virtual avatar that conforms to user customization; a user virtual avatar with features of the current Point of Interest (POI) and a graphical user interface (GUI) are generated by integration; and according to the generated virtual avatar combined with capabilities such as a scenario engine, scenario entertainment and interaction are performed by integration.

In a case that the material required for generating the virtual avatar includes the description statement or the description statement and the second image, generating the description information of the virtual avatar according to the preference information of the user and in combination with the key information extracted from the material may further include: checking the description statement, and in response to determining that the description statement conforms to a set rule, determining the description statement or the description statement and the second image as the description information. For example, the description statement input by the user via voice is "please generate a virtual avatar of anime character A", which conforms to the set rule (the set rule is, for example, that the description statement includes semantic information), and the second image is a picture of anime character A uploaded by the user, then the material includes the virtual avatar of anime character A and the picture of anime character A, the preference information of the user is an ACG style, then the preset template is an ACG style template, and the description information can be that anime character A is displayed in a ACG style.

The present disclosure provides multiple methods for generating virtual avatars for users, facilitating users to select according to their needs, thereby generating virtual avatars that conform to user personalization.

Based on the same inventive concept, an embodiment of the present disclosure further provides a virtual avatar generation apparatus, applied to a central control system of a vehicle. FIG. 2 is a schematic diagram of a virtual avatar generation apparatus according to an embodiment. As shown in FIG. 2, the apparatus includes: an acquisition unit 201, configured to, according to a generation mode of a virtual avatar set by a user, acquire a material corresponding to the generation mode; a generation unit 202, configured to, according to preference information of the user and in combination with key information extracted from the material, generate description information of the virtual avatar, and generate the virtual avatar by inputting the description information of the virtual avatar into a target model corresponding to a target style indicated by the description information.

The specific implementation process of each unit can be referred to the foregoing embodiments and will not be repeated here.

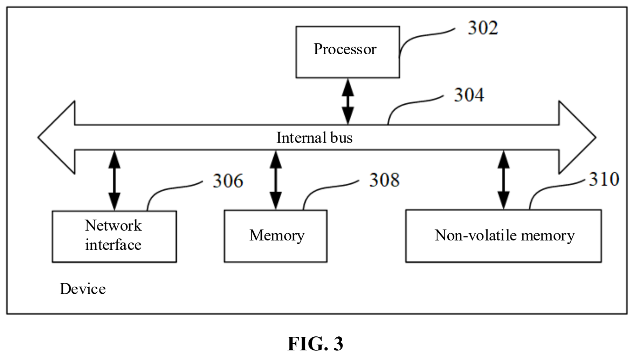

FIG. 3 is a schematic structural diagram of a device according to an embodiment. Please refer to FIG. 3. At the hardware level, the device includes a processor 302, an internal bus 304, a network interface 306, a memory 308, and a non-volatile memory 310, and may include other hardware required by other application scenarios. One or more embodiments of the present disclosure can be implemented based on software, for example, by the processor 302 reading a corresponding computer program from the non-volatile memory 310 into the memory 308 and then running the computer program. Besides software implementation, one or more embodiments of the present disclosure do not exclude other implementation methods, such as logic devices or a combination of software and hardware, etc. That is to say, the execution subject of the following processing flow is not limited to each logical unit, but can also be hardware or logic devices.

The systems, apparatuses, modules or units illustrated in the above embodiments may be specifically implemented by computer chips or entities, or by products having certain functions.

In a typical configuration, a computer includes one or more processors (CPUs), input/output interfaces, network interfaces, and memory.

The memory may include non-persistent memory, random access memory (RAM) and/or non-volatile memory in computer-readable media, such as read-only memory (ROM) or flash memory (flash RAM). The memory is an example of a computer-readable medium.

Computer-readable media include permanent and non-permanent, removable and non-removable media, which can achieve information storage by any method or technology. The information can be computer-readable instructions, data structures, program modules, or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, compact disc read-only memory (CD-ROM), digital versatile disc (DVD) or other optical storage, magnetic cassette, magnetic tape disk storage, quantum memory, graphene-based storage media, or other magnetic storage devices, or any other non-transmission media that can be used to store information accessible by a computing device. As defined herein, computer-readable media do not include transitory computer-readable media (transitory media), such as modulated data signals and carrier waves.

It should be noted that the user information (including but not limited to user device information, user personal information, etc.) and data (including but not limited to data used for analysis, stored data, displayed data, etc.) involved in the present disclosure are all information and data authorized by the user or fully authorized by all parties. The collection, use, and processing of relevant data need to comply with relevant laws, regulations and standards of relevant countries and regions, and corresponding operation entrances are provided for users to choose to authorize or refuse.

It should also be noted that the terms "including", "comprising" or any other variation thereof are intended to cover non-exclusive inclusion, such that a process, method, article or device that includes a series of elements includes not only those elements, but also other elements not explicitly listed, or elements inherent to such process, method, article, or device. Without more restrictions, the element defined by the sentence "including a ..." does not exclude the existence of other identical elements in the process, method, article, or device that includes the element.

The above describes specific embodiments of the present disclosure. Other embodiments are within the scope of the appended claims. In some cases, the actions or steps recited in the claims can be performed in a different order than in the embodiments and still achieve desirable results. In addition, the processes depicted in the drawings do not necessarily require the specific order or sequential order shown to achieve the desired results. In some implementations, multitasking and parallel processing are also possible or may be advantageous.

The terminology used in one or more embodiments of the present disclosure is for the purpose of describing particular embodiments only and is not intended to be limiting of one or more embodiments of the present disclosure. The singular forms "a", "said" and "the" used in one or more embodiments of the present disclosure and the appended claims are also intended to include the plural forms, unless the context clearly indicates otherwise. It should also be understood that the term "and/or" as used herein refers to and encompasses any and all possible combinations of one or more of the associated listed items.

It should be understood that although terms such as first, second, and third may be used in one or more embodiments of the present disclosure to describe various information, such information should not be limited to these terms. These terms are only used to distinguish information of the same type from each other. For example, without departing from the scope of one or more embodiments of the present disclosure, first information may also be referred to as second information, and similarly, second information may also be referred to as first information. Depending on the context, the word "if" as used herein may be interpreted as "when" or "upon" or "in response to determining".

The above are one or more embodiments of the present disclosure, and are not intended to limit the present disclosure. Any modifications, equivalent replacements, improvements, etc., made within the spirit and principles of one or more embodiments of the present disclosure shall be included within the scope of protection of one or more embodiments of the present disclosure.

## Claims

1. A virtual avatar generation method, applied to a central control system of a vehicle, comprising:
according to a generation mode of a virtual avatar set by a user, acquiring a material corresponding to the generation mode;
according to preference information of the user and in combination with key information extracted from the material, generating description information of the virtual avatar; and
generating the virtual avatar by inputting the description information of the virtual avatar into a target model corresponding to a target style indicated by the description information.

2. The method according to claim 1, wherein in a case that the generation mode is adjusting a default virtual avatar based on environmental information,
acquiring the material corresponding to the generation mode comprises:
acquiring a reference image of the default virtual avatar, and environmental information at a current location of the vehicle; and
determining the reference image and the environmental information as the material required for generating the virtual avatar; and
generating the description information of the virtual avatar according to the preference information of the user and in combination with the key information extracted from the material comprises:
acquiring at least one first keyword associated with the environmental information;
determining a preset template conforming to the preference information of the user;
according to the preset template and the at least one first keyword, obtaining a description statement of the virtual avatar; and
determining the reference image and the description statement as the description information of the virtual avatar.

3. The method according to claim 1, wherein in a case that the generation mode is adjusting a default virtual avatar based on environmental information and geographical information,
acquiring the material corresponding to the generation mode comprises:
acquiring a reference image of the default virtual avatar, and environmental information and customs at a current location of the vehicle; and
determining the reference image, the environmental information, and the customs as the material required for generating the virtual avatar; and
generating the description information of the virtual avatar according to the preference information of the user and in combination with the key information extracted from the material comprises:
acquiring at least one first keyword associated with the environmental information, and at least one second keyword associated with the customs;
determining a preset template conforming to the preference information of the user;
according to the preset template, the at least one first keyword, and the at least one second keyword, obtaining a description statement of the virtual avatar; and
determining the reference image and the description statement as the description information of the virtual avatar.

4. The method according to claim 1, wherein in a case that the generation mode is generating a virtual avatar based on a collected face image,
acquiring the material corresponding to the generation mode comprises:
acquiring a face image collected by an image capture device in the vehicle; and
determining the face image as the material required for generating the virtual avatar; and
generating the description information of the virtual avatar according to the preference information of the user and in combination with the key information extracted from the material comprises:
recognizing the face image, acquiring a facial feature of the face image;
acquiring at least one third keyword associated with the facial feature;
determining a preset template conforming to the preference information of the user;
according to the preset template and the at least one third keyword, obtaining a description statement of the virtual avatar; and
determining the face image and the description statement as the description information of the virtual avatar.

5. The method according to claim 1, wherein in a case that the generation mode is selecting a preset virtual avatar based on collected in-vehicle information, the method further comprising:
acquiring a first image collected by an image capture device in the vehicle;
acquiring a face sub-image in the first image; and
matching the face sub-image with a pre-stored base image, and generating a virtual avatar corresponding to a matched base image.

6. The method according to claim 1, wherein in a case that the generation mode is a custom virtual avatar,
acquiring the material corresponding to the generation mode comprises:
acquiring a description statement of the virtual avatar input by the user; and
determining the description statement as the material required for generating the virtual avatar; and
generating the description information of the virtual avatar according to the preference information of the user and in combination with the key information extracted from the material comprises:
checking the description statement, and
in response to determining that the description statement conforms to a set rule, determining the description statement as the description information of the virtual avatar.

7. The method according to claim 1, wherein in a case that the generation mode is a custom virtual avatar,
acquiring the material corresponding to the generation mode comprises:
acquiring a description statement of the virtual avatar and a second image input by the user; and
determining the description statement and the second image as the material required for generating the virtual avatar; and
generating the description information of the virtual avatar according to the preference information of the user and in combination with the key information extracted from the material comprises:
checking the description statement, and
in response to determining that the description statement conforms to a set rule, determining the description statement and the second image as the description information of the virtual avatar.

8. The method according to claim 1, wherein generating the virtual avatar by inputting the description information of the virtual avatar into the target model corresponding to the target style indicated by the description information comprises:
in response to detecting that the user allows generating the virtual avatar based on a network and the central control system is connected to the network, downloading, from a server, the target model corresponding to the target style indicated by the description information, and inputting the description information into the target model to obtain the virtual avatar; and
in response to detecting that the user does not allow generating the virtual avatar based on the network, or the user allows generating the virtual avatar based on the network but the central control system is not connected to the network, acquiring, from pre-stored target models, the target model corresponding to the target style indicated by the description information, and inputting the description information into the target model to obtain the virtual avatar.

9. A virtual avatar generation apparatus, applied to a central control system of a vehicle, the apparatus comprising:
an acquisition unit, configured to, according to a generation mode of a virtual avatar set by a user, acquire a material corresponding to the generation mode; and
a generation unit, configured to, according to preference information of the user and in combination with key information extracted from the material, generate description information of the virtual avatar, and generate the virtual avatar by inputting the description information of the virtual avatar into a target model corresponding to a target style indicated by the description information.

10. An electronic device, comprising:
one or more processors; and
one or more memories for storing processor-executable instructions;
wherein the processor-executable instructions are executable by the one or more processors to implement the method according to any one of claims 1 to 8 by running the executable instructions.

11. A computer-readable storage medium, having computer instructions stored thereon, wherein the computer instructions are executable by a processor to implement the method according to any one of claims 1 to 8.
